(19) **Europäisches Patentamt**

**European Patent Office**

**Office européen des brevets**

(11) **EP 1 307 975 B1**

(12) **EUROPÄISCHE PATENTSCHRIFT**

(45) Veröffentlichungstag und Bekanntmachung des Hinweises auf die Patenterteilung:
**29.12.2004   Patentblatt 2004/53**

(51) Int Cl.⁷: **H04B 7/005**

(21) Anmeldenummer: **01962618.3**

(86) Internationale Anmeldenummer:
**PCT/DE2001/003029**

(22) Anmeldetag: **08.08.2001**

(87) Internationale Veröffentlichungsnummer:
**WO 2002/015431 (21.02.2002 Gazette 2002/08)**

(54) **VERFAHREN ZUR REGELUNG DER SENDELEISTUNG IN EINEM FUNKSYSTEM**

METHOD FOR REGULATING THE TRANSMISSION POWER IN A RADIO COMMUNICATIONS SYSTEM

PROCEDE POUR REGLER LA PUISSANCE D'EMISSION D'UN SYSTEME RADIO

(84) Benannte Vertragsstaaten:
**DE FR GB**

(30) Priorität: **17.08.2000  DE 10040228**

(43) Veröffentlichungstag der Anmeldung:
**07.05.2003   Patentblatt 2003/19**

(60) Teilanmeldung:
**04025574.7**

(73) Patentinhaber: **SIEMENS AKTIENGESELLSCHAFT**
**80333 München (DE)**

(72) Erfinder:
 • **RAAF, Bernhard**
  **81475 München (DE)**
 • **SENNINGER, Christian**
  **82515 Wolfratshausen (DE)**

(56) Entgegenhaltungen:
**EP-A- 0 926 842        WO-A-00/22757**
**DE-A- 19 821 519**

**Beschreibung**

Die vorliegende Erfindung betrifft ein Verfahren zur Regelung der Sendeleistung in einem Funksystem, insbesondere in einem Mobilfunksystem.

In Mobilfunksystemen, beispielsweise gemäß dem UMTS-Mobilfunkstandard ("Universal Mobile Telecommunication System"), ist eine kontinuierliche.Regelung der Sendeleistung der Basisstationen und der Mobilstationen vorgesehen. Dabei erfolgt die Regelung der Sendeleistung insbesondere in Form eines geschlossenen Regelkreises ("Closed Loop Power Control"). Zu diesem Zweck überträgt ein Sender, beispielsweise eine Mobilstation, ein bestimmtes Sendesignal, welches auch als Pilotsignal bezeichnet wird, an den Empfänger, beispielsweise eine Basisstation. Das Pilotsignal umfasst dabei ein oder mehrere Pilotbits, welche von der Basisstation ausgewertet werden, um davon abhängig das auf dem jeweiligen Übertragungskanal empfangene Signal-Interferenz-Verhältnis ("Signal to Interference Ratio", SIR) zu bestimmen, welches mit einem Sollwert verglichen wird. Die Basisstation sendet daraufhin einen Leistungsregelungsbefehl an die Mobilstation, welcher abhängig von dem Vergleichsergebnis eine Erhöhung oder Erniedrigung der Sendeleistung der Mobilstation zum Ziel hat.

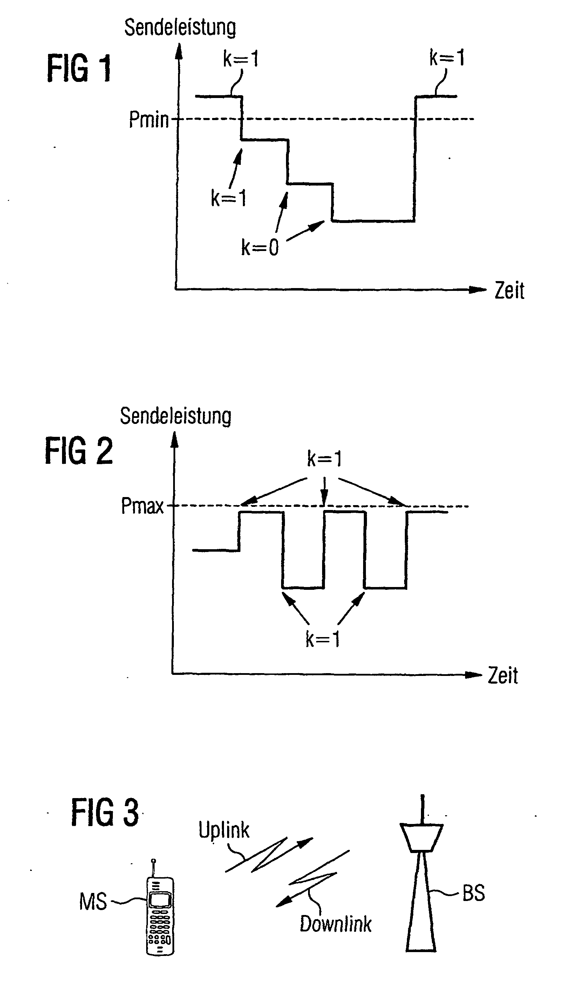

Zur Verdeutlichung dieses Vorgangs ist in Figur 3 die Kommunikation zwischen einer Mobilstation MS und einer Basisstation BS eines Mobilfunksystems, beispielsweise eines UMTS-Mobilfunksystems, dargestellt. Nachfolgend wird davon ausgegangen, dass die Sendeleistung der Mobilstation MS geregelt werden soll. Die Mobilstation MS überträgt über den von der Mobilstation zu der Basisstation gerichteten Übertragungskanal, welcher als "Uplink"-Übertragungskanal bezeichnet wird, das zuvor beschriebene Pilotsignal, welches von der Basisstation BS ausgewertet wird. Die Basisstation BS erzeugt daraufhin Leistungsregelungsbefehle, welche über den von der Basisstation zu der Mobilstation gerichteten Übertragungskanal, der als "Downlink"-Übertragungskanal bezeichnet wird, an die Mobilstation MS gesendet werden. In der Regel handelt es sich bei diesen Leistungsregelungsbefehlen lediglich um Informationen, welche die Mobilstation MS anweisen, ihre Sendeleistung um einen vorgegebenen Betrag zu erhöhen bzw. zu erniedrigen oder auch unverändert zu lassen. Im Prinzip kann der Leistungsregelungsbefehl somit lediglich ein Bit umfassen, welches abhängig von seinem Wert die Mobilstation MS anweist, seine Sendeleistung um den zuvor erwähnten Wert zu erhöhen bzw. zu erniedrigen.

Die Kommunikation zwischen der Mobilstation MS und der Basisstation BS erfolgt in Form einer Rahmen- und Zeitschlitzstruktur, wobei insbesondere in jedem Zeitschlitz ein neues Pilotsignal von der Mobilstation MS gesendet wird. Entsprechend wird von der Basisstation BS in jedem Zeitschlitz ein neuer Leistungsregelungsbefehl an die Mobilstation MS gesendet, welcher auf dem während des vorhergehenden Zeitschlitzes gesendeten Pilotsignal beruht.

Für den UMTS-Mobilfunkstandard ist ein sogenannter "Compressed Mode" definiert, welcher vorsieht, dass die über den Uplink- und/oder Downlink-Übertragungskanal zu übertragenden Informationen in komprimierter Form übertragen werden. Dies hat zur Folge, dass in einem im "Compressed Mode" gesendeten komprimierten Rahmen ein oder mehrere Zeitschlitze vorhanden sind, in denen keine Informationsübertragung stattfindet. Diese Zeitschlitze bilden eine Übertragungslücke ("Transmission Gap"), welche unter anderem für Nachbarkanalbeobachtungen, zur Vorbereitung von Handover-Vorgängen oder dergleichen genutzt werden kann.

Tritt im Uplink- und/oder Downlink-Kanal eine derartige Übertragungslücke auf, fehlt der Basisstation BS das zur Erzeugung der Leistungsregelungsbefehle erforderliche Pilotsignal der Mobilstation MS oder der Mobilstation MS der entsprechende Leistungsregelungsbefehl der Basisstation BS. Durch eine derartige Übertragungslücke im Uplink- und/oder Downlink-Übertragungskanal wird somit der zur Regelung der Sendeleistung der Mobilstation MS dienende geschlossene Regelkreis gestört, so dass während einer derartigen Übertragungslücke keine Leistungsregelungsbefehle gesendet werden können.

Die obige Beschreibung ist selbstverständlich im Prinzip auch auf eine Regelung der Sendeleistung der Basisstation BS anwendbar, wobei jedoch die vorliegende Erfindung nachfolgend - ohne Einschränkung der Allgemeinheit - anhand einer Regelung der Sendeleistung der Mobilstation MS beschrieben wird.

Um das zuvor mit dem Auftreten einer Übertragungslücke verbundenen Problem bei der Sendeleistungsregelung zu lösen, wurde bezüglich des UMTS-Mobilfunkstandards vorgeschlagen, anhand der in der Vergangenheit erzeugten Leistungsregelungsbefehle einen Schätzwert für den in Zukunft zu erwartenden Leistungsregelungsbefehl zu erzeugen, so dass dieser Schätzwert nach dem Auftreten einer Übertragungslücke der Regelung der Sendeleistung zu Grunde gelegt werden kann. Dabei kann der Schätzwert $\delta_i$, welcher die zu erwartende Sendeleistungsänderung nach einer Übertragungslücke beschreibt, insbesondere mit Hilfe der folgenden rekursiven Gleichungen ermittelt werden, wobei $TPC_i$ den im Zeitschlitz Nr. i empfangenen Leistungsregelungsbefehl und $\Delta TPC$ die zur Einstellung der Sendeleistung zur Verfügung stehende Schrittweite bezeichnet. $\delta_{i-1}$ bezeichnet den für den vorhergehenden Zeitschlitz i-1 ermittelten Schätzwert:

$$(1) \ \delta_i = 0{,}9375 \cdot \delta_{i-1} - 0{,}96875 \cdot TPC_i \cdot \Delta TPC$$

$$(2) \ \delta_{i-1} = \delta_i$$

Bei der Regelung der Sendeleistung einer Mobilstation (Vergleiche Figur 3) soll der Schätzwert $\delta_i$ von der Mobilstation MS kontinuierlich in allen Zeitschlitzen neu berechnet werden, in denen sowohl ein Uplink-Pilotsignal als auch ein Downlink-Leistungsregelungsbefehl übertragen wird. Zudem wird der Schätzwert $\delta_i$ auch in dem ersten Zeitschlitz einer Uplink-Übertragungslücke berechnet, falls in dem entsprechenden Zeitschlitz ein Downlink-Leistungsregelungsbefehl übertragen worden ist. Der Wert $\delta_{i-1}$ wird immer dann auf 0 gesetzt, wenn der dem Uplink-Kanal zugeordnete Steuerkanal der Mobilstation Ms initiiert oder aktiviert wird. Des Weiteren wird $\delta_{i-1}$ am Ende des ersten Zeitschlitzes nach jeder Uplink-Übertragungslücke und am Ende des ersten Zeitschlitzes nach jeder Downlink-Übertragungslücke auf Null zurückgesetzt. Der Schätzwert für $\delta_i$ wird jeweils am Ende des ersten Zeitschlitzes nach jeder Uplink-Übertragungslücke auf 0 gesetzt.

Ein mit den obigen Formeln bzw. der zuvor beschriebenen Vorgehensweise verbundenes Problem tritt jedoch auf, wenn sich die von der Mobilstation MS emittierte Sendeleistung nahe einer vorgegebenen maximalen Sendeleistung Pmax bzw. minimalen Sendeleistung Pmin befindet. Es wurde für UMTS-Mobilfunksysteme vorgeschlagen, in der Nähe derartiger Sendeleistungsgrenzwerte eine Skalierung durchzuführen, um ein deutliches Unterschreiten der vorgegebenen minimalen Sendeleistung Pmin bzw. ein deutliches Überschreiten der vorgegebenen maximalen Sendeleistung Pmax zu verhindern. Durch diese Skalierung wird die obige Formel (1) durch folgende Formel ersetzt:

$$(3) \quad \delta_i = 0{,}9375 \cdot \delta_{i-1} - 0{,}96875 \cdot TPC_i \cdot \Delta TPC \cdot k$$

Dabei bezeichnet k einen Parameter, welcher den Wert "0" annimmt, wenn eine Skalierung durchgeführt werden soll, während der Parameter k den Wert "1" besitzt, wenn keine Skalierung angewendet und die Sendeleistung auf übliche Art und Weise ermittelt werden soll.

Der Parameter k wird herkömmlicherweise immer dann auf k=0 gesetzt, wenn die von der Mobilstation MS emittierte Sendeleistung auf Grund vorhergegangener Leistungsregelungsbefehle die vorgegebene maximale Sendeleistung Pmax überschreiten bzw. die vorgegebene minimale Sendeleistung Pmin unterschreiten würde. In anderen Fällen wird k=1 verwendet.

Die von der Mobilstation MS durchzuführende Skalierung kann derart gewählt sein, dass in der Nähe der minimalen Sendeleistung Pmin Leistungsregelungsbefehle, welche eine weitere Verringerung der Sendeleistung der Mobilstation zur Folge haben, grundsätzlich mit einem bestimmten Faktor, beispielsweise mit 1/4, multipliziert und somit abgeschwächt werden, während Leistungsregelungsbefehle, welche eine Erhöhung der Sendeleistung zur Folge haben, ohne Skalierung angewendet werden.

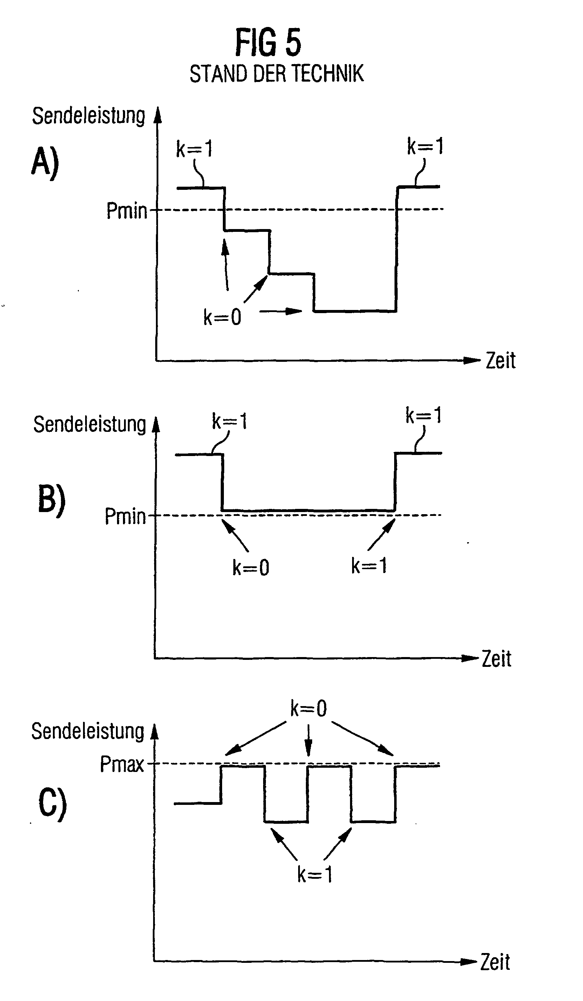

Ein entsprechender Verlauf der Sendeleistung ist in Figur 5A dargestellt. Wie aus Figur 5A ersichtlich ist, befindet sich die Mobilstation MS bereits nahe der minimalen Sendeleistungsgrenze Pmin. Anschließend erhält die Mobilstation einen Leistungsregelungsbefehl, welcher die Sendeleistung verringert, wodurch die minimale Sendeleistungsgrenze Pmin unterschritten werden würde. Die Mobilstation MS wendet die zuvor erwähnte Skalierung an und multipliziert jeden nachfolgenden Leistungsregelungsbefehl, welcher eine Verringerung der Sendeleistung zur Folge hat, mit dem Faktor 1/4, so dass diese Leistungsregelungsbefehle abgeschwächt werden. Da für diese Leistungsregelungsbefehle die Skalierung angewendet wird, besitzt der Parameter k den Wert k=0. Am Ende des in Figur 5A gezeigten Sendeleistungsverlaufs empfängt die Mobilstation MS einen Leistungsregelungsbefehl, der eine Erhöhung der Sendeleistung zur Folge hat. Dieser Leistungsregelungsbefehl wird ohne Skalierung umgesetzt, so dass für diesen Leistungsregelungsbefehl der Parameter k=1 beträgt. Betrachtet man den zuvor erläuterten Sendeleistungsverlauf hinsichtlich der zuvor beschriebenen $\delta$-Formel, so würden diejenigen Leistungsregelungsbefehle, welche zu einer Sendeleistung unterhalb der minimalen Sendeleistungsgrenze Pmin führen würden, in der $\delta$-Formeln durch setzen des Parameter k zu "0" nicht in die Tendenz der Leistungsregelungsbefehle eingehen, während Leistungsregelungsbefehle, welche einen Sprung der Sendeleistung nach oben bzw. über die minimale Sendeleistungsgrenze Pmin hinaus zur Folge haben, in den Schätzwert $\delta$ eingehen. Würde sich der in Figur 5A gezeigte Verlauf der Sendeleistung genau in der Art mehrfach hintereinander wiederholen, so würde als Tendenz der Sendeleistungsbefehle in der $\delta$-Formel eine deutliche Erhöhung der Sendeleistung berücksichtigt werden, was jedoch nicht der Realität entspricht.

Bei Anwendung des zuvor beschriebenen Skalierungsverfahrens steht es der Mobilstation MS frei, ob es ein Unterschreiten der minimalen Sendeleistungsgrenze Pmin zulässt oder nicht. Sollte die Mobilstation MS ein Unterschreiten der minimalen Sendeleistungsgrenze Pmin nicht unterstützen, kann sich bei Anwendung des herkömmlichen Skalierungsverfahrens ein Sendeleistungsverlauf ergeben, wie er in Figur 5B gezeigt ist. Bei den in Figur 5B gezeigten Beispiel wird grundsätzlich bei Erreichen der minimalen Sendeleistungsgrenze Pmin die Skalierung derart aktiviert, dass mit dem Wert der minimalen Sendeleistungsgrenze Pmin gesendet wird. Bei Erreichen der minimalen Sendeleistungsgrenze Pmin wird wiederum der Parameter auf k=0 gesetzt. Ansonsten gilt wiederum das bereits anhand Figur 5A erläuterte Prinzip.

Ein ähnliches Problem kann auch an der maximalen Sendeleistungsgrenze Pmax auftreten, wobei die Skalierung beispielsweise derart gewählt sein kann, dass bei einem Leistungsregelungsbefehl, welcher zum Überschreiten der maximalen Sendeleistungsgrenze Pmax führen würde, dieser Leistungsregelungsbefehl derart reduziert wird, dass lediglich mit dem Betrag der maximalen Sendeleistung Pmax gesendet wird. Bei Auftreten eines Leistungsregelungsbefehls, welcher zum Unterschreiten der maximalen Sendeleitsungsgrenze führen würde, wird hingegen keine Skalierung angewendet.

Ein entsprechender Sendeleistungsverlauf ist in Figur 5C dargestellt. Wie aus Figur 5C ersichtlich ist, wird ein Leistungsregelungsbefehl, welcher zum Überschreiten der maximalen Sendeleistungsgrenze Pmax führen würde, dem Skalierungsprozess unterworfen, d. h. der Parameter k wird zu k=0 gesetzt, und der Leistungsregelungsbefehl wird derart reduziert, dass nur mit dem Wert der maximalen Sendeleistung Pmax gesendet wird. Tritt hingegen ein Leistungsregelungsbefehl auf, welcher die Sendeleistung der Mobilstation MS verringert, wird keine Skalierung angewendet (k=1), und dieser Leistungsregelungsbefehl wird voll umgesetzt, so dass die maximale Sendeleistungsgrenze deutlich unterschritten wird.

Analog zu den hinsichtlich der minimalen Sendeleistungsgrenze Pmin in Figur 5A und 5B gezeigten Beispielen tritt auch bei dem hinsichtlich der maximalen Sendeleistungsgrenze Pmax in Figur 5C gezeigten Beispiel das Problem auf, dass bei mehrmaliger Wiederholung sich als Tendenz ein Leistungsregelungsverhalten abzeichnen würde, welches nicht der Realität entspricht. Insbesondere würde bei dem in Figur 5C gezeigten Beispiel als Tendenz der Leistungsreglungsbefehle eine Verringerung der Sendeleistung berücksichtigt werden, welche nicht der Realität entspricht.

Der vorliegenden Erfindung liegt daher die Aufgabe zu Grunde, ein verbessertes Verfahren zur Regelung der Sendeleistung in einem Funksystem, insbesondere einem Mobilfunksystem, vorzuschlagen, womit die zuvor erwähnten Probleme vermieden werden können und auch im Bereich der Sendeleistungsgrenzen eine exakte und realistische Regelung der Sendeleistung möglich ist.

Diese Aufgabe wird erfindungsgemäß durch die Merkmale der unabhängigen Ansprüche gelöst. Die abhängigen Ansprüche definieren jeweils bevorzugte und vorteilhafte Ausführungsformen der vorliegenden Erfindung.

Erfindungsgemäß wird im Gegensatz zu dem zuvor an Hand Figur 5 beschriebenen Stand der Technik vorgeschlagen, für Leistungsregelungsbefehle, welche zum Überschreiten bzw. Erreichen der maximalen Sendeleistungsgrenze bzw. zum Unterschreiten bzw. Erreichen der minimalen Sendeleistungsgrenze führen würden, den Parameter k auf k=1 zusetzen. Bei Anwendung des zuvor beschriebenen Verfahrens zum Schätzen des Leistungsregelungswerts nach Auftreten der Übertragungslücke würde dies bedeuten, dass Leistungsregelungsbefehle, welche zum Überschreiten bzw. Erreichen der maximalen Sendeleistungsgrenze bzw. zum Unterschreiten bzw. Erreichen der minimalen Sendeleistungsgrenze führen würden, in der Eingangs erläuterten δ-Formel (3) berücksichtigt werden, da für diese Leistungsregelungsbefehle der Parameter auf den Wert k=1 gesetzt ist. Wie nachfolgend noch näher erläutert wird, kann durch diese Maßnahme bei Anwendung eines Skalierungsverfahrens an den Sendeleistungsgrenzen eine unerwünschte bzw. unbeabsichtigte Erniedrigung des Schätzwerts $\delta_i$ an der minimalen Sendeleistungsgrenze bzw. eine unbeabsichtigte Erhöhung des Schätzwerts $\delta_i$ an der maximalen Sendeleistungsgrenze, d.h. eine nicht der Realität entsprechende Schätzung des vergangenen Sendeleistungsregelungsverhaltens, vermieden werden.

Die vorliegende Erfindung eignet sich insbesondere für UMTS-Mobilfunksysteme, wo nach Auftreten einer Übertragungslücke ein Schätzwert für die Sendeleistungsregelung ermittelt wird. Grundsätzlich ist die vorliegende Erfindung jedoch auf beliebige Funksysteme anwendbar, bei denen im Bereich der Sendeleistungsgrenzen Skalierungsverfahren zur Anwendung kommen.

Die vorliegende Erfindung wird nachfolgend anhand von Beispielen näher unter Bezugnahme auf die beigefügte Zeichnung erläutert.

Figur 1 und Figur 2 zeigen beispielhafte Sendeleistungsverläufe zur Erläuterung der vorliegenden Erfindung,

Figur 3 zeigt eine Darstellung zur Erläuterung der Kommunikation zwischen einer Mobilstation und einer Basisstation in einem Mobilfunksystem,

Figur 4A und 4B zeigen Signalverläufe von $\delta_i$ zur Verdeutlichung der Vorteile der vorliegenden Erfindung, und

Figur 5A-C zeigen beispielhafte Sendeleistungsverläufe gemäß dem Stand der Technik.

In Figur 1 ist ein Sendeleistungsverlauf nach einem erfindungsgemäßen Skalierungsverfahren dargestellt, wobei der in Figur 1 gezeigte Sendeleistungsverlauf dem in Figur 5A gezeigten Sendeleistungsverlauf entspricht. Analog zu Figur 5A befindet sich die Mobilstation MS, deren Sendeleistung zu regeln ist, bereits nahe an der minimalen Sendeleistungsgrenze Pmin. Die Mobilstation MS erhält einen Leistungsregelungsbefehl, wodurch die minimale Sendeleistungsgrenze Pmin unterschritten werden würde. Im Gegensatz zu Figur 5A wird gemäß Figur 1 für diesen Leistungsregelungsbefehl der Parameter k auf k=1 gesetzt, so dass der Leistungsregelungsbefehl gemäß der zuvor beschriebenen δ-Formel (3) zur Berechnung des Schätzwerts $\delta_i$ für die Sendeleistungsregelung, welcher nach dem Auftreten einer Übertragungslücke zwischen der Mobilstation MS und der Basisstation BS zur Einstellung der Sendeleistung verwendet werden kann, berücksichtigt wird. Ansonsten erfolgt die Skalierung bzw. die Regelung der Sendeleistung wie zuvor anhand Figur 5A beschrieben, d.h. die nachfolgenden Leistungsregelungsbefehle, welche eine weitere Erniedrigung der Sendeleistung zur Folge haben, werden beispielsweise mit dem Faktor 1/4 multipliziert und somit abgeschwächt, wobei diese Befehle in der Formel (3) durch k=0 nicht berücksichtigt werden. Empfängt die Mobilstation MS einen Leistungsregelungsbefehl, welcher eine Erhöhung der Sendeleistung zur Folge hat, wird grundsätzlich keine Skalierung angewendet und k auf k=1 gesetzt, so dass diese Leistungsregelungsbefehle wiederum in der $\delta$-Formel (3) zur Berechnung des Schätzwerts $\delta_i$ berücksichtigt werden.

Erfindungsgemäß wird auch an der oberen Sendeleistungsgrenze Pmax ein Leistungsregelungsbefehl, welcher zum Überschreiten bzw. Erreichen dieser Sendeleistungsgrenze Pmax führen würde, in der $\delta$-Formel (3) berücksichtigt und k=1 gesetzt. Dies sei nachfolgend beispielhaft anhand des in Figur 2 gezeigten Sendeverlaufs verdeutlicht, welcher dem in Figur 5C gezeigten Sendeverlauf entspricht. Wie aus Figur 2 ersichtlich ist, wird im Gegensatz zu dem in Figur 5C gezeigten Beispiel für jeden Leistungsregelungsbefehl, welcher ein Überschreiten oder Erreichen der oberen Sendeleistungsgrenze Pmax zur Folge hat, der Parameter k auf k=1 gesetzt, so dass der entsprechende Leistungsregelungsbefehl in die Berechnung des Schätzwerts $\delta_i$ gemäß der zuvor beschriebenen Formel (3) eingeht. Ansonsten erfolgt die Berechnung des Sendeleistungsregelungsschätzwerts $\delta_i$ wie zuvor anhand Figur 5C beschrieben und für Leistungsregelungsbefehle, welche eine Verringerung der Sendeleistung zur Folge haben, wird ebenfalls k=1 gesetzt.

Ein dem in Figur 2 gezeigten Verlauf entsprechender Sendeleistungsverlauf kann selbstverständlich analog zu Figur 5B auch bei Begrenzung auf den minimalen Sendeleistungsgrenzwert Pmin erhalten werden, wobei für Leistungsregelungsbefehle, welche zum Erreichen bzw. Unterschreiten von Pmin führen würden, k=1 gesetzt wird.

Insgesamt wird somit erfindungsgemäß vorgeschlagen, Leistungsregelungsbefehle, welche zum Überschreiten oder Erreichen der maximalen Sendeleistung Pmax bzw. zum Unterschreiten oder Erreichen der minimalen Sendeleistung Pmin führen würden, in der obigen $\delta$-Formel (3) zu berücksichtigen, indem für diese Leistungsregelungsbefehle der Parameter entsprechend auf k=1 gesetzt wird.

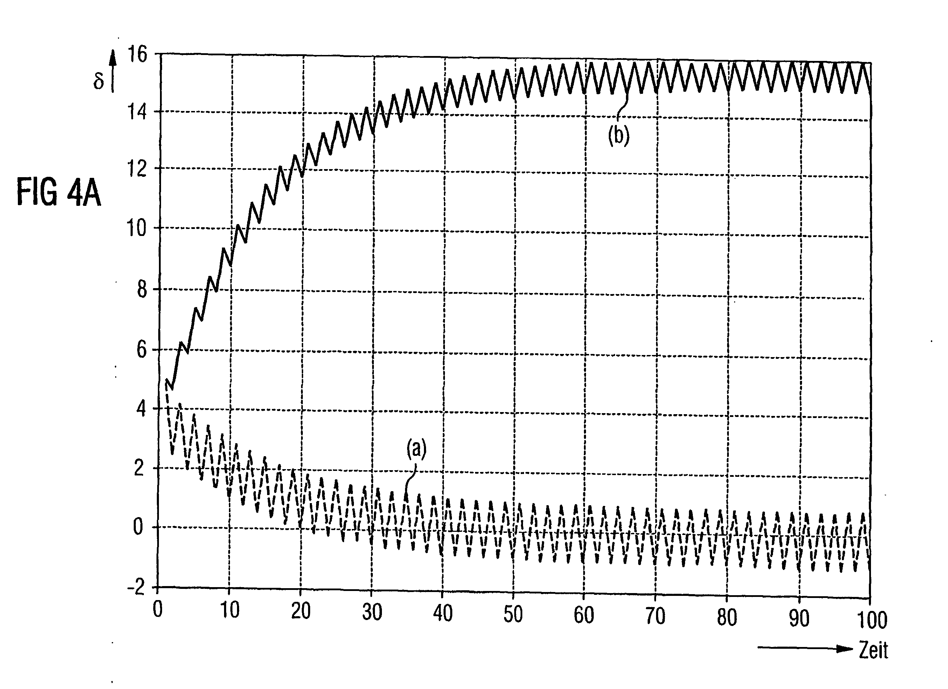

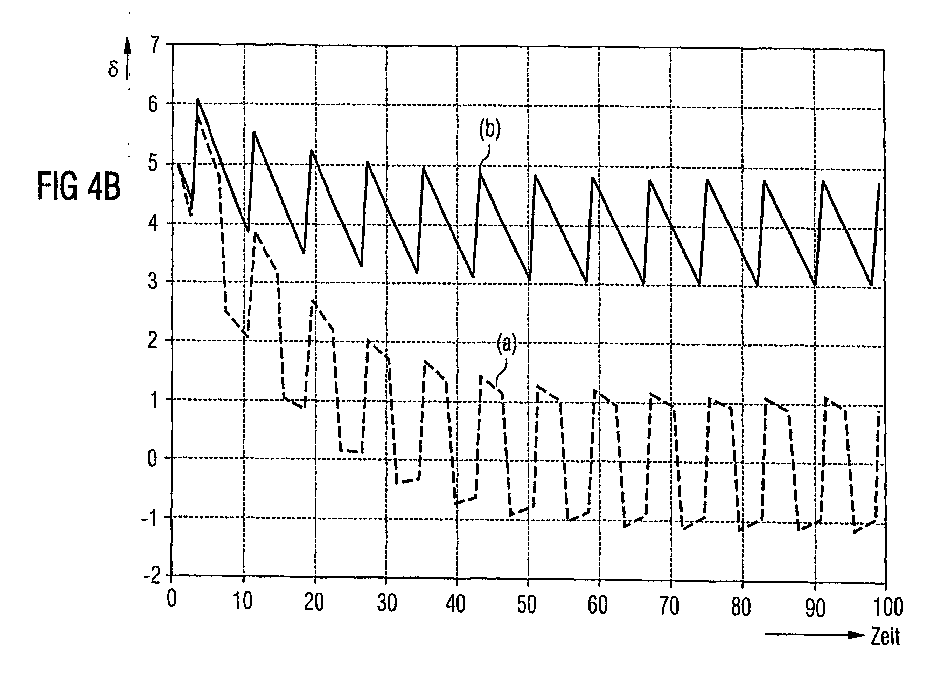

Die Auswirkung der vorliegenden Erfindung soll nachfolgend näher anhand der in Figur 4A und 4B gezeigten Signalverläufe verdeutlicht werden, wobei jeweils der gemäß der 5-Formel (3) berechnete Schätzwert $\delta$ über der Zeit bzw. über der Anzahl der Zeitschlitze aufgetragen ist. Die Kennlinie (a) bezeichnet jeweils den sich bei Anwendung des erfindungsgemäßen Verfahren einstellenden Verlauf für den Schätzwert $\delta$, während die Kennlinie (b) den sich bei Anwendung des herkömmlichen Verfahrens (vgl. Figur 5) einstellenden Verlauf des

Schätzwerts $\delta$ bezeichnet. Es wurde jeweils das Verhalten der $\delta$-Formel (3) für den Fall eines unendlich fortgesetzten Sendeleistungsverlaufs gemäß den Darstellungen von Figur 2 bzw. Figur 5C betrachtet, wobei $\delta$ zu Beginn mit 5 dBm vorbelegt ist und $\Delta$TPC=2dB gilt.

In Übereinstimmung mit dem erfindungsgemäßen Verfahren gehen auch Leistungsregelungsbefehle in die obige $\delta$-Formel (3) bzw. in die Berechnung des Sendeleistungswerts $\delta$ ein, welche zum Überschreiten bzw. Erreichen der oberen Sendeleistungsgrenze Pmax führen würden. In der Darstellung von Figur 4B wird in jedem vierten Zeitschlitz der maximale Sendeleistungsgrenzwert Pmax entweder erreicht oder wieder verlassen. Aus Figur 4B ist ersichtlich, dass der Fehler bzw. die Abweichung der Kennlinie (b) von der erfindungsgemäßen Kennlinie (a) ca. 4 dB beträgt.

Sollte sich jedoch die Frequenz des Erreichens bzw. Verlassens der maximalen Sendeleistungsgrenze Pmax erhöhen, würde sich für die Kennlinie (b) ein größerer Fehler ergeben, was aus der Darstellung von Figur 4A deutlich wird.

Die zuvor anhand Figur 5 erläuterten Probleme, welche mit der Formel (3) verbunden sind, könnten alternativ beispielsweise gelöst werden, indem die $\delta$-Formel (3) wie folgt modifiziert wird:

$$(4) \quad \delta_i = 0{,}9375 \cdot \delta_{i-1} - (0{,}9675 \cdot TPC_i \cdot \Delta TPC)_{\text{ausgeführt}}$$

D.h., es wird für die $\delta$-Formel nicht die befohlene Sendeleistungsänderung, sondern die tatsächlich durchgeführte Sendungsleistungsänderung verwendet.

## Patentansprüche

1. Verfahren zur Regelung der Sendeleistung in einem Funksystem,
   wobei von einem Sender (MS) ein Sendesignal gesendet wird,
   wobei von einem Empfänger (BS) das Sendesignal des Senders (MS) empfangen und ausgewertet wird, um davon abhängig einen Leistungsregelungsbefehl zur Regelung der Sendeleistung des Senders (MS) zu erzeugen und an den Sender (MS) zu übertragen, und
   wobei die Sendeleistung des Senders (MS) nach Auftreten einer Übertragungslücke in dem zwischen dem Sender (MS) und dem Empfänger (BS) oder zwischen dem Empfänger (BS) und dem Sender (MS) definierten Übertragungskanal gemäß einem Schätzwert eingestellt wird, welcher in der Vergangenheit für den Sender (MS) erzeugte Leistungsregelungsbefehle berücksichtigt, wobei die Ermittlung des Schätzwerts in Abhängigkeit von einem Parameter erfolgt, welcher angibt, ob der jeweilige Leistungsregelungsbefehl bei der Ermittlung des Schätzwerts berücksichtigt werden soll oder nicht,
**dadurch gekennzeichnet,**
**dass** der für die Ermittlung des Schätzwerts verwendete Parameter für einen Leistungsregelungsbefehl, welcher ein Erreichen oder Über- bzw. Unterschreiten des vorgegebenen Grenzwerts (Pmax, Pmin) durch die Sendeleistung des Senders (MS) zur Folge haben würde, auf einen Wert gesetzt wird, welcher eine Berücksichtigung dieses Leistungsregelungsbefehls bei der Ermittlung des Schätzwerts zur Folge hat.

2. Verfahren nach Anspruch 1,
   wobei von einem Sender (MS) ein Sendesignal gesendet wird,
   wobei von einem Empfänger (BS) das Sendesignal des Senders (MS) empfangen und ausgewertet wird, um davon abhängig einen Leistungsregelungsbefehl zur Regelung der Sendeleistung des Senders (MS) zu erzeugen und an den Sender (MS) zu übertragen, und
   wobei die Sendeleistung des Senders (MS) nach Auftreten einer Übertragungslücke in dem zwischen dem Sender (MS) und dem Empfänger (BS) oder zwischen dem Empfänger (BS) und dem Sender (MS) definierten Übertragungskanal gemäß einem Schätzwert $\delta$ eingestellt wird, welcher in der Vergangenheit für den Sender (MS) erzeugte Leistungsregelungsbefehle berücksichtigt, wobei die Ermittlung des Schätzwerts $\delta$ in Abhängigkeit von einem Parameter k erfolgt, welcher angibt, ob der jeweilige Leistungsregelungsbefehl bei der Ermittlung des Schätzwerts $\delta$ berücksichtigt werden soll oder nicht,
   **dadurch gekennzeichnet,**
   **dass** der für die Ermittlung des Schätzwerts $\delta$ verwendete Parameter k für einen Leistungsregelungsbefehl, welcher ein Erreichen oder Über- bzw. Unterschreiten des vorgegebenen Grenzwerts (Pmax, Pmin) durch die Sendeleistung des Senders (MS) zur Folge haben würde, auf einen Wert gesetzt wird, welcher eine Berücksichtigung dieses Leistungsregelungsbefehls bei der Ermittlung des Schätzwerts $\delta$ zur Folge hat.

3. Verfahren nach Ansprüch 2,
   **dadurch gekennzeichnet,**
   **dass** der Schätzwert $\delta_i$ zum Zeitpunkt i gemäß folgender rekursiver Formel berechnet wird:

$$\delta_i = 0{,}9375 \cdot \delta_{i-1} - 0{,}96875 \cdot TPC_i \cdot \Delta TPC \cdot k$$

wobei $\delta_{i-1}$ den Leistungsschätzwert zum Zeitpunkt i-1, $TPC_i$ den von dem Sender (MS) zum Zeitpunkt i empfangenen Leistungsregelungsbefehl, $\Delta TPC$ eine Schrittweite, mit der die Sendeleistung des Senders (MS) eingestellt wird, und k den Parameter bezeichnet, und
wobei der Parameter k für einen Leistungsregelungsbefehl, welcher ein Erreichen oder Über- bzw. Unterschreiten des vorgegebenen Grenzwerts (Pmax, Pmin) durch die Sendeleistung des Senders (MS) zur Folge haben würde, auf k=1 gesetzt wird.

4. Verfahren nach einem der vorhergehenden Ansprüche,
   **dadurch gekennzeichnet,**
   **dass** das Funksystem ein Mobilfunksystem, insbesondere ein UMTS-Mobilfunksystem, ist.

5. Verfahren nach einem der vorhergehenden Ansprüche,
   **dadurch gekennzeichnet,**
   **dass** der Schätzwert $\delta$ ein Leistungsregelungsschätzwert ist,
   wobei die Sendeleistungsregulierung des Senders (MS) nach Auftreten einer Übertragungslücke gemäß dem Leistungsregelungsschätzwert eingestellt wird.

6. Sendevorrichtung für ein Funksystem,
   wobei die Sendevorrichtung (MS) derart ausgestaltet ist, dass sie von einer anderen Sendevorrichtung (BS) des Funksystems gesendete Leistungsregelungsbefehle empfängt und zur Regelung der eigenen Sendeleistung verwendet, und
   wobei die Sendevorrichtung (MS) derart ausgestaltet ist, dass sie ihre Sendeleistungsregulierung nach Auftreten einer Übertragungslücke in dem zwischen dem Sender (MS) und dem Empfänger (BS) oder zwischen dem Empfänger (BS) und dem Sender (MS) definierten Übertragungskanal gemäß einem Schätzwert neu justiert, welcher in der Vergangenheit für den Sender (MS) erzeugte Leistungsregelungsbefehle berücksichtigt, wobei in dem Sender (MS) die Ermittlung des Schätzwerts in Abhängigkeit von einem Parameter erfolgt, welcher für jeden Leistungsregelungsbefehl angibt, ob der entsprechende Leistungsregelungsbefehl bei der Ermittlung des Schätzwerts berücksichtigt werden soll oder nicht,
   **dadurch gekennzeichnet,**
   **dass** die Sendevorrichtung (MS) zur Durchführung eines Verfahrens nach einem der Ansprüche 1-5 ausgestaltet ist.

7. Sendevorrichtung nach Anspruch 6,
   wobei die Sendevorrichtung (MS) derart ausgestaltet ist, dass sie von einer anderen Sendevorrichtung (BS) des Funksystems gesendete Leistungsregelungsbefehle empfängt und zur Regelung der eigenen Sendeleistung verwendet, und
   wobei die Sendevorrichtung (MS) derart ausgestaltet ist, dass sie ihre Sendeleistungsregulierung nach Auftreten einer Übertragungslücke in dem zwischen dem Sender (MS) und dem Empfänger (BS) oder zwischen dem Empfänger (BS) und dem Sender (MS) definierten Übertragungskanal gemäß einem Schätzwert δ neu justiert, welcher in der Vergangenheit für den Sender (MS) erzeugte Leistungsregelungsbefehle berücksichtigt, wobei in dem Sender (MS) die Ermittlung des Schätzwerts δ in Abhängigkeit von einem Parameter k erfolgt, welcher für jeden Leistungsregelungsbefehl angibt, ob der entsprechende Leistungsregelungsbefehl bei der Ermittlung des Schätzwerts δ berücksichtigt werden soll oder nicht,
**dadurch gekennzeichnet,**
**dass** die Sendevorrichtung (MS) zur Durchführung eines Verfahrens nach einem der Ansprüche 1-5 ausgestaltet ist.

## Claims

1.  Method for controlling the transmission power in a radio system,
    in which a transmission signal is transmitted by a transmitter (MS), in which the transmission signal from the transmitter (MS) is received and evaluated by a receiver (BS) in order as a function of this to produce a power control command for controlling the transmission power of the transmitter (MS) and to transmit this to the transmitter (MS), and
    in which the transmission power of the transmitter (MS) is set on the basis of an estimated value after the occurrence of a transmission gap in the transmission channel which is defined between the transmitter (MS) and the receiver (BS) or between the receiver (BS) and the transmitter (MS), which estimated value takes account of power control commands produced for the transmitter (MS) in the past, with the estimated value being determined as a function of a parameter which indicates whether the respective power control command is or is not intended to be taken into account in the determination of the estimated value,
    **characterized**
    **in that** the parameter which is used for determining the estimated value is set, for a power control command which would result in the transmission power of the transmitter (MS) reaching, exceeding or falling below the predetermined limit value (Pmax, Pmin), to a value which results in this power control command being taken into account when determining the estimated value.

2.  Method according to Claim 1,
    in which a transmission signal is transmitted by a transmitter (MS), in which the transmission signal from the transmitter (MS) is received and evaluated by a receiver (BS) in order as a function of this to produce a power control command for controlling the transmission power of the transmitter (MS) and to transmit this to the transmitter (MS), and
in which the transmission power of the transmitter (MS) is set on the basis of an estimated value δ after the occurrence of a transmission gap in the transmission channel which is defined between the transmitter (MS) and the receiver (BS) or between the receiver (BS) and the transmitter (MS), which estimated value takes account of power control commands produced for the transmitter (MS) in the past, with the estimated value δ being determined as a function of a parameter k which indicates whether the respective power control command is or is not intended to be taken into account in the determination of the estimated value δ,
**characterized**
**in that** the parameter k which is used for determining the estimated value δ is set, for a power control command which would result in the transmission power of the transmitter (MS) reaching, exceeding or falling below the predetermined limit value (Pmax, Pmin), to a value which results in this power control command being taken into account when determining the estimated value δ.

3.  Method according to Claim 2,
    **characterized**
    **in that** the estimated value $\delta_i$ at the time i is calculated using the following recursive formula:

    $$\delta_i = 0.9375 \cdot \delta_{i-1} - 0.96875 \cdot TPC_i \cdot \Delta TPC \cdot k$$

    where $\delta_{i-1}$ denotes the power estimated value at the time i-1, $TPC_i$ denotes the power control command received by the transmitter (MS) at the time i, $\Delta TPC$ denotes a step width using which the transmission power of the transmitter (MS) is set, and k denotes the parameter, and
    in which the parameter k is set to k=1 for a power control command which would result in the transmission power of the transmitter (MS) reaching, exceeding or falling below the predetermined limit value (Pmax, Pmin).

4.  Method according to one of the preceding claims,
    **characterized**
    **in that** the radio system is a mobile radio system, in particular a UMTS mobile radio system.

5.  Method according to one of the preceding claims,
    **characterized**
    **in that** the estimated value δ is a power control estimated value, with the transmission power control for the transmitter (MS) being set on the basis of the power control estimated value after the occurrence of a transmission gap.

6. Transmitting apparatus for a radio system,
in which the transmitting apparatus (MS) is designed such that it receives power control commands which are transmitted from another transmitting apparatus (BS) in the radio system, and uses them to control its own transmission power, and
in which the transmitting apparatus (MS) is designed such that it readjusts its transmission power control on the basis of an estimated value after the occurrence of a transmission gap in the transmission channel which is defined between the transmitter (MS) and the receiver (BS) or between the receiver (BS) and the transmitter (MS), which estimated value takes account of power control commands produced for the transmitter (MS) in the past, with the estimated value being determined in the transmitter (MS) as a function of a parameter which indicates for each power control command whether the corresponding power control command should or should not be taken into account when determining the estimated value **characterized in that** the transmitting apparatus (MS) is designed to carry out a method according to one of Claims 1 - 5.

7. Transmitting apparatus according to Claim 6,
in which the transmitting apparatus (MS) is designed such that it receives power control commands which are transmitted from another transmitting apparatus (BS) in the radio system, and uses them to control its own transmission power, and
in which the transmitting apparatus (MS) is designed such that it readjusts its transmission power control on the basis of an estimated value $\delta$ after the occurrence of a transmission gap in the transmission channel which is defined between the transmitter (MS) and the receiver (BS) or between the receiver (BS) and the transmitter (MS), which estimated value $\delta$ takes account of power control commands produced for the transmitter (MS) in the past, with the estimated value $\delta$ being determined in the transmitter (MS) as a function of a parameter k which indicates for each power control command whether the corresponding power control command should or should not be taken into account when determining the estimated value $\delta$,
**characterized in that** the transmitting apparatus (MS) is designed to carry out a method according to one of Claims 1 - 9.

**Revendications**

1. Procédé pour régler la puissance d'émission dans un système radio, un signal d'émission étant émis par un émetteur (MS), le signal d'émission de l'émetteur (MS) étant reçu et évalué par un récepteur (BS) pour, en fonction de cette évaluation, générer une instruction de réglage de la puissance pour régler la puissance d'émission de l'émetteur (MS), et la transmettre à l'émetteur (MS), et
la puissance d'émission de l'émetteur (MS) étant réglée selon une estimation après l'apparition d'un vide de transmission dans la voie de transmission définie entre l'émetteur (MS) et le récepteur (BS) ou entre le récepteur (BS) et l'émetteur (MS), laquelle prend en compte les instructions de réglage de la puissance générées dans le passé pour l'émetteur (MS), l'estimation étant déterminée en fonction d'un paramètre, qui indique si l'instruction de réglage de la puissance respective doit ou non être prise en compte lors de la détermination de l'estimation,
**caractérisé en ce que**
le paramètre utilisé pour déterminer l'estimation pour une instruction de réglage de la puissance, laquelle entraînerait une atteinte ou un dépassement vers le haut resp. vers le bas d'un seuil donné (Pmax, Pmin) par la puissance d'émission de l'émetteur (MS), est placé sur une valeur qui entraîne la prise en compte de cette instruction de réglage de la puissance lors de la détermination de l'estimation.

2. Procédé selon la revendication 1,
un signal d'émission étant envoyé par un émetteur (MS), le signal d'émission de l'émetteur (MS) étant reçu et évalué par un récepteur (BS) pour, en fonction de cette évaluation, générer une instruction de réglage de la puissance pour régler la puissance d'émission de l'émetteur (MS) et la transmettre à l'émetteur (MS), et
la puissance d'émission de l'émetteur (MS) étant réglée selon une estimation $\delta$ après l'apparition d'un vide de transmission entre la voie de transmission définie entre l'émetteur (MS) et le récepteur (BS) ou entre le récepteur (BS) et l'émetteur (MS), laquelle prend en compte les instructions de réglage de la puissance générées dans le passé pour l'émetteur (MS), l'estimation $\delta$ étant déterminée en fonction d'un paramètre k, qui indique si l'instruction de réglage de la puissance respective doit ou non être prise en compte lors de la détermination de l'estimation $\delta$,
**caractérisé en ce que**
le paramètre k utilisé pour déterminer l'estimation $\delta$ pour une instruction de réglage de la puissance, laquelle entraînerait une atteinte ou un dépassement vers le haut resp. un dépassement vers le bas du seuil donné (Pmax, Pmin) par la puissance d'émission de l'émetteur (MS), est placé sur une valeur, qui entraîne la prise en compte de cette instruction de réglage de la puissance lors de la détermination de l'estimation $\delta$.

3. Procédé selon la revendication 2,

**caractérisé en ce que**

l'estimation $\delta_i$ est calculée selon la formule récurrente suivante au moment i :

$$\delta_i = 0,9375 \cdot \delta_{i-1} - 0,96875 \cdot TPC_i \cdot \Delta TPC \cdot k$$

$\delta_{i-1}$ désignant l'estimation de performance au moment i-1, $TPC_i$ l'instruction de réglage de la puissance reçue par l'émetteur (MS) au moment i, $\Delta TPC$ un pas de progression, avec lequel la puissance d'émission de l'émetteur (MS) est réglée et k le paramètre, et
le paramètre k étant placé sur k=1 pour une instruction de réglage de la puissance, qui entraînerait une atteinte ou un dépassement vers le haut resp. vers le bas du seuil donné (Pmax, Pmin) par la puissance d'émission de l'émetteur (MS).

4. Procédé selon l'une des revendications précédentes,
   **caractérisé en ce que**
   le système radio est un système de téléphonie mobile, notamment un système de téléphonie mobile UMTS.

5. Procédé selon l'une des revendications précédentes,
   **caractérisé en ce que**
   l'estimation $\delta$ est une estimation de réglage de la puissance, le réglage de la puissance d'émission de l'émetteur (MS) s'effectuant après l'apparition d'un vide de transmission conformément à l'estimation de réglage de la puissance.

6. Dispositif émetteur pour un système radio,
   le dispositif émetteur (MS) étant conçu de telle manière qu'il reçoit des instructions de réglage de la puissance émise par un autre dispositif émetteur (BS) du système radio et l'utilise pour régler sa propre puissance d'émission, et
   le dispositif émetteur (MS) étant conçu de telle manière qu'il réajuste son réglage de la puissance d'émission après l'apparition d'un vide de transmission dans la voie de transmission définie entre l'émetteur (MS) et le récepteur (BS) ou entre le récepteur (BS) et l'émetteur (MS) selon une estimation, laquelle tient compte des instructions de réglage de la puissance générée dans le passé pour l'émetteur (MS), la détermination de l'estimation dans l'émetteur (MS) s'effectuant en fonction d'un paramètre qui indique pour chaque instruction de réglage de la puissance si l'instruction de réglage de la puissance correspondante doit ou pas être considérée lors de la détermination de l'estimation,
   **caractérisé en ce que**
   le dispositif émetteur (MS) est conçu pour exécuter un procédé selon l'une des revendications 1 à 5.

7. Dispositif émetteur selon la revendication 6,
   le dispositif émetteur (MS) étant conçu de telle manière qu'il reçoit les instructions de réglage de la puissance émise par un autre dispositif émetteur (BS) du système radio et les utilise pour régler sa propre puissance d'émission et
   le dispositif émetteur (MS) étant conçu de telle manière qu'il réajuste selon une estimation $\delta$ son réglage de puissance d'émission après l'apparition d'un vide de transmission dans la voie de transmission définie entre l'émetteur (MS) et le récepteur (BS) ou entre le récepteur (BS) et l'émetteur (MS), laquelle estimation tient compte des instructions de réglage de la puissance générées dans le passé pour l'émetteur (MS), l'estimation $\delta$ étant évaluée dans l'émetteur (MS) en fonction d'un paramètre k qui indique pour chaque instruction de réglage de la puissance si l'instruction de réglage de la puissance correspondante doit ou pas être prise en compte pour déterminer l'estimation $\delta$,
   **caractérisé en ce que**
   le dispositif émetteur (MS) est conçu pour exécuter un procédé selon l'une des revendications 1 à 5.

**FIG 1**

**FIG 2**

**FIG 3**

FIG 4A

EP 1 307 975 B1

FIG 4B

EP 1 307 975 B1

# FIG 5
STAND DER TECHNIK